# EUROPEAN PATENT SPECIFICATION

(11) **EP 0 481 928 B1**
(45) Date of publication and mention of the grant of the patent: **22.02.1995**
(21) Application number: 91830416.3
(22) Date of filing: 08.10.1991
(51) Int. Cl.: B62D 53/08

(54) **An adjustable fifth-wheel bearing for connecting a tractor to a semitrailer**
Eine einstellbare Drehschemel-Lagerung zur Verbindung einer Zugmaschine mit einem Sattelauflieger
Un support ajustable de sellette d'attelage pour relier un tracteur à une semi-remorque

(30) Priority: 16.10.1990 IT 6778490
(43) Date of publication of application: 22.04.1992
(73) Proprietor: IVECO FIAT S.p.A., 10156 Torino (IT)
(72) Inventor: Millari, Vito, I-10146 Torino (IT)
(74) Representative: Bosotti, Luciano

(56) References cited:
- EP-A- 0 052 792
- GB-A- 2 126 966
- US-A- 3 580 611

## Description

The present invention relates to a fifth-wheel bearing for connecting a tractor to a semitrailer, as stated in the pre-characterising portion of the appended claim 1.

In the commercial vehicles sector, there is particular need to be able to adjust the longitudinal position of the fifth wheel relative to the tractor chassis to adapt it to various types of semitrailer and to different loads.

Automatic devices for adjusting the position of the fifth wheel have been produced but these are quite complex and, since adjustment does not have to be carried out very often, their high cost is not justified.

European application EP-A-0052792 describes a simplified device for adjusting the position of the fifth wheel. This device requires the use of a special kind of fifth wheel since it does not provide for the use of a fixing plate. Moreover, the device of this application allows the tractor chassis to deviate very little from its design dimensions.

GB-A-2126966, which corresponds to the preamble of claim 1, discloses a fifth-wheel bearing including a fixing plate of which the top carries the fifth wheel and the bottom is fixed to parallel side members of the tractor chassis. Support beams are fixed to the side members of the chassis and are interposed between the fixing plate and the side members. The beams have a plurality of holes aligned parallel to the side member so that the plate can be fixed to the beams in an adjustable position by screw-fixing means.

The object of the present invention is to provide a device of the type specified at the beginning of the description which does not have the aforesaid disadvantages and which is simple and cheap to produce.

According to the invention, this object is achieved by virtue of the features set forth in the characterising portion of the appended claim 1.

These characteristics enable the use of a conventional fifth wheel with a fixing plate. Moreover, the device according to the invention enables any construction tolerances in the chassis to be taken up and its installation on the tractor does not weaken the structure since the aligned holes for adjusting the position of the fifth wheel are not formed in the side members of the chassis but in the auxiliary support beams.

The channel-like sections of the support beams increase their rigidity considerably and the system whereby the threaded bushes or fixing nuts are fixed to a single slidable bar considerably simplifies the adjustment of the position of the fifth wheel.

Further advantages and characteristics of the device according to the invention will become clear from the detailed description which follows, purely by way of non-limiting example, with reference to the appended drawings, in which:

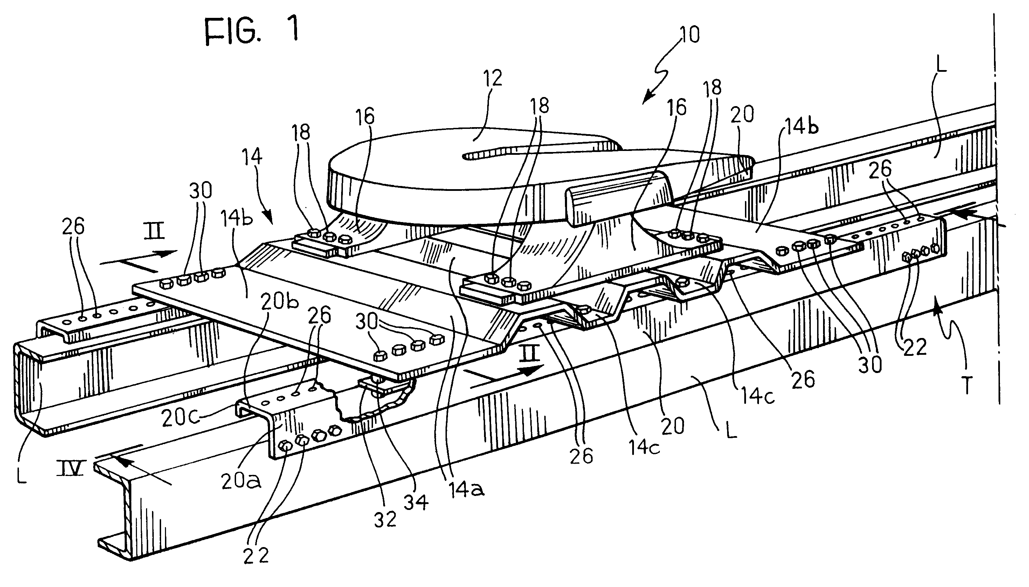

Figure 1 is a perspective view of the bearing according to the invention,
Figure 2 is a section taken on the line II-II of Figure 1,
Figure 3 is a detail of Figure 2 on an enlarged scale,

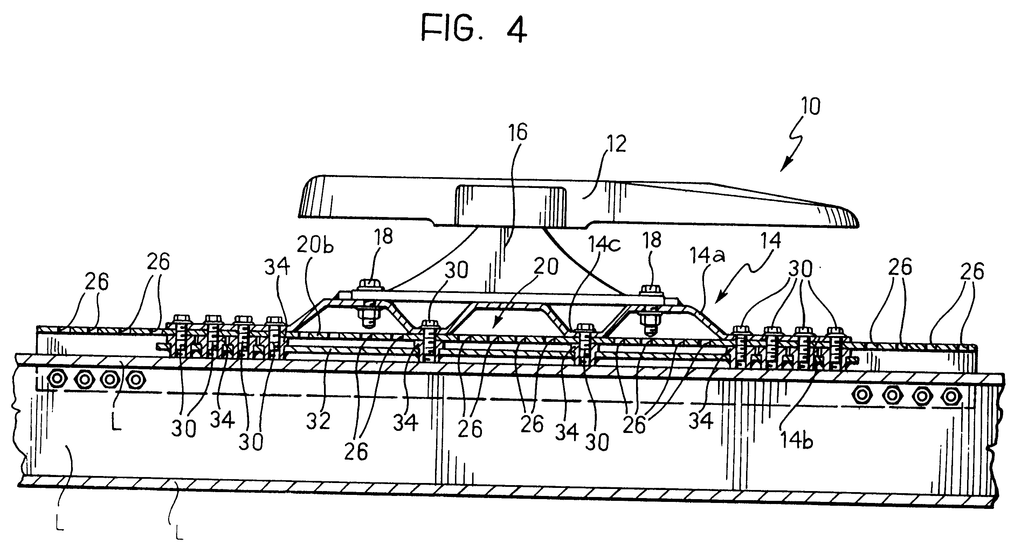

Figure 4 is a section taken on the line IV-IV of Figure 1, and

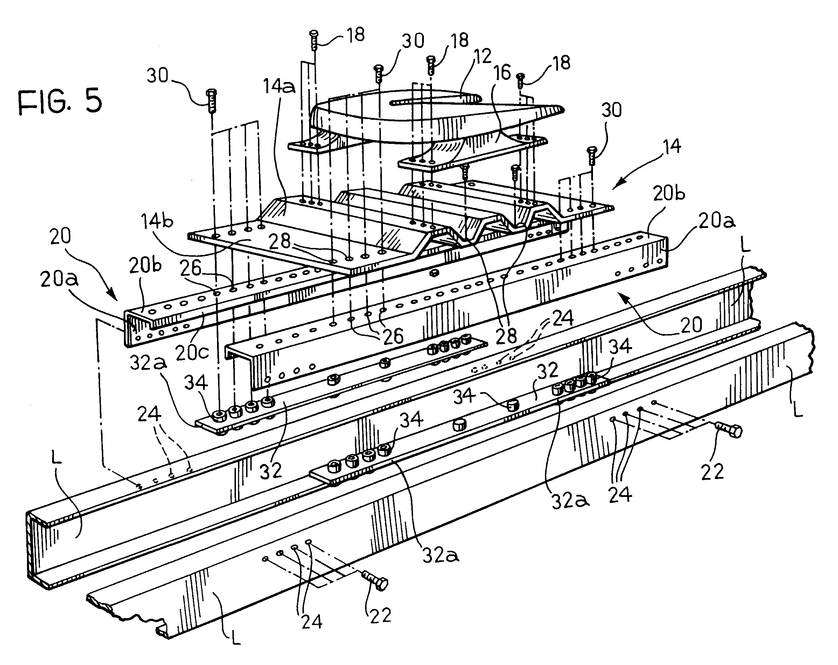

Figure 5 is an exploded perspective view of the bearing of Figure 1.

With reference to the drawings, a fifth-wheel bearing for semitrailers is generally indicated 10 and is adapted to be mounted on the chassis T of a tractor including longitudinal side members L.

The bearing 10 includes, in known manner, a fifth wheel 12 fixed to a shaped plate 14 by means of a pair of lateral supports 16. The plate 14 has omega-shaped transverse ribs 14a, both for stiffening the plate itself and for enabling it to be fixed to the supports 16 by means of bolts 18.

According to the invention, the fixing plate 14 is mounted on parallel, substantially-channel-sectioned support beams 20 which are fixed to the side members L of the chassis T of the tractor by bolts 22.

Each support beam 20 thus defines a wider, flat portion 20a with through-holes 24 for the fitting of the bolts 22 in correspondence with the outer face of a side member L, a second flat portion 20b facing and spaced from the upper portion of the side member L, and a flat portion 20c of a width such as to define, with the other flat portions of the beam and the flat top portion of the respective side member L, a duct whose function will become clear from the description below.

The horizontal flat portion 20b of each beam 20 has a plurality of equally-spaced holes 26 aligned parallel to the beams 20 and to the side members L. The fixing plate 14 has holes 28 aligned with and at the same spacing as the holes 26 for the passage of fixing screws 30. The holes 28 are formed in the side edges of flat end portions 14b and in the bottom walls 14c of the omega-shaped ribs 14a. Bars 32 carrying a plurality of internally-threaded bushes 34 welded at 36 in holes 38 in the bars 32 are used to tighten the screws 30 which are adapted to connect the plate 14 to the beams 20 and hence to the side members L. The distances between the threaded bushes 34 aligned on each bar 32 correspond exactly to the distances between the holes 28 in the plate 14. There are thus two central bushes which are further apart and correspond to the holes 28 in the bottoms of the ribs 14a and, adjacent each end 32a of the bar 32, four threaded bushes which are closer together and correspond to the holes 28 in the flat end portions 14b of the plate.

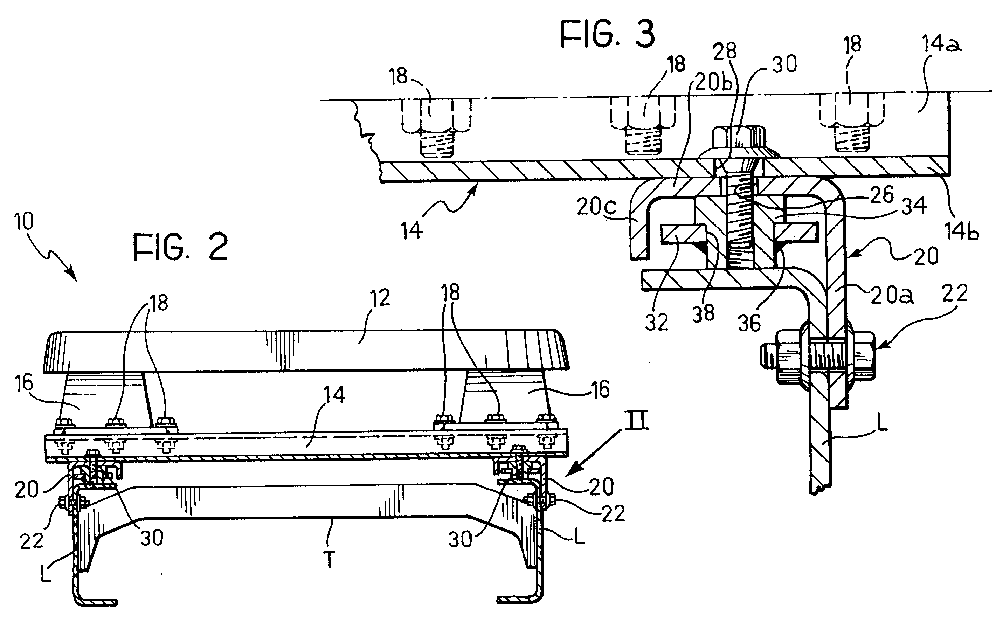

As shown clearly in Figure 3, the distance between the horizontal flat portion 20b of each beam 20 and the horizontal flat portion of the respective side member L corresponds substantially to the lengths of the threaded bushes 34, thus making the assembly of the side member L and the beam 20 more rigid so that some of the load on the plate 14 is transmitted directly to the side members L through the bushes 34. Figure 3 also shows clearly that the diameters of both the holes 28 in the fixing plate 14 and the holes 26 in the support beams 20 are larger than the outside diameters of the screws 30 so that any tolerances can be taken up.

In order to adjust the position of the fifth wheel 12, it suffices to slacken and remove the screws 30 without the need to clamp the respective threaded bushes 34 against rotation since they are fixed to the bar 32. After all the screws 30 have been removed, the plate 14 is moved along the beams 20 to the selected position. Similarly, the bars 32 which, to advantage, may be joined together and may have pull handles (not shown) are moved in the ducts so that the threaded bushes 34 are brought into alignment with the holes 28 in the plate 14. In this configuration, the screws 30 are screwed back into the threaded bushes 34, clamping the plate 14 to the support beams 20.

Naturally, it is intended that, the principle of the invention remaining the same, the details of construction and forms of embodiment may be varied widely with resepct to those described and illustrated in the drawings, without thereby departing from the scope of the present invention.

## Claims

1. A fifth-wheel bearing for connecting a tractor to a semitrailer, wherein the tractor chassis (T) has a couple of longitudinally extending, transversally spaced, parallel side members (L), on each of which a respective longitudinal channel-sectioned support beam (20) is fixed;
the fifth-wheel (12) being carried on the top of a fixing plate (14);
said support beams being interposed between said side members and the bottom of said fixing plate;
the fixing plate having through holes (28) adapted to be engaged by screws (30) for fixing the fixing plate to a couple of longitudinally extending, transversally spaced, parallel bars (32), each slidable into the channel of one of said support beams;
each of said support beams having a plurality of holes (26) forming a row aligned parallel to the respective side member, there being provided male and female screw-fixing means (30,34) adapted to cooperate with each of said bars and said holes in the respective support beam, so that the bars can be fixed to the beams in an adjustable position,
characterised in that:
- the channel of each of said support beams defines with an upper portion of the respective side member a duct in which the respective bar is slidable, so that each support beam is interposed between the plate and the respective bar;
- said holes in the support beams are through holes;
- said female screw-fixing means is constituted by threaded clamping bushes which are fixed to the bars;
- said male screw-fixing means is constituted by said screws for fixing the fixing plate, which extend through said holes in the plate, through said holes in the support beams and engage said threaded clamping bushes.

2. A bearing according to claim 1, characterised in that each bar (22) has holes (38) in which the clamping bushes (34) are welded.

3. A bearing according to Claim 2, characterised in that the distances between the upper portions of the side members (L) and the facing portions (20b) of the support beams (20) correspond substantially to the lengths of the threaded clamping bushes (34).

4. A device according to any one of the preceding claims, characterising in that the support beams (20) are fixed to the side members (L) of the chassis (T) by bolts (22).

## Patentansprüche

1. Drehschemel-Lagerung zur Verbindung einer Zugmaschine mit einem Sattelauflieger, wobei das Zugmaschinen-Fahrgestell (T) ein Paar längsverlaufende, in Querrichtung mit Abstand angeordnete parallele Seitenträger (L) aufweist, an denen je ein längsverlaufender Stutzträger (20) mit U-Profil befestigt ist; und der Drehschemel (12) auf einer Aufspannplatte (14) gehalten ist;
die Stutzträger zwischen den Seitenträgern und der Unterseite der Aufspannplatte angeordnet sind;
die Aufspannplatte Durchgangslöcher (28) aufweist, die für den Eingriff mit Schrauben (30) ausgebildet sind, um die Aufspannplatte an einem Paar längsverlaufender, in Querrichtung mit Abstand angeordneter paralleler Schienen (32) zu befestigen, deren jede in die Nut eines der Stützträger hineinverschiebbar ist;
jeder Stützträger mehrere Locher (26) aufweist, die eine zum jeweiligen Seitenträger parallel ausgerichtete Reihe bilden, und Schraubbefestigungsmittel (30, 34) mit Außengewinde und Innengewinde vorgesehen und so ausgebildet sind, daß sie mit jeder der Schiene und jedem der Löcher im jeweiligen Stützträger zusammenwirken, so daß die Schienen in einer einstellbaren Position an den Trägern befestigt werden können,
dadurch gekennzeichnet, daß:
- die Nut jedes Stützträgers mit einem oberen Teil des jeweiligen Seitenträgers einen Kanal bildet, in dem die jeweilige Schiene verschiebbar ist, so daß jeder Stützträger zwischen der Platte und der jeweiligen Schiene angeordnet ist;
- die Löcher in den Stützträgern Durchgangslöcher sind;
- die mit Innengewinde versehenen Schraubbefestigungsmittel durch Befestigungsbuchsen mit Gewinde gebildet sind, die an den Schienen befestigt sind;
- die mit Außengewinde versehenen Schraubbefestigungsmittel durch die Schrauben zum Befestigten der Aufspannplatte gebildet sind, die die Löcher in der Platte und die Löcher in den Stützbalken durchsetzen und mit den mit Gewinde versehenen Befestigungsbuchsen im Eingriff stehen.

2. Lagerung nach Anspruch 1, dadurch gekennzeichnet, daß jede Schiene (22) Löcher (38) aufweist, in denen die Befestigungsbuchsen (34) durch Schweißung befestigt sind.

3. Lagerung nach Anspruch 2, dadurch gekennzeichnet, daß die Abstände zwischen den oberen Teilen der Seitenträger (L) und den gegenüberliegenden Teilen (20b) der Stützträger (20) im wesentlichen den Längenabmessungen der mit Gewinde versehenen Befestigungsbuchsen (34) entsprechen.

4. Einrichtung nach einem der vorhergehenden Ansprüche, dadurch gekennzeichnet, daß die Stützträger (20) mittels Bolzen (22) an den Seitenträgern (L) des Fahrgestells (T) befestigt sind.

## Revendications

1. Un support de sellette d'attelage, pour relier un tracteur à une semi-remorque, dans lequel le châssis de tracteur (T) comporte un couple d'organes latéraux (L) s'étendant longitudinalement, espacés transversalement et parallèles, sur chacun desquels est fixé une poutre support (20) longitudinale, à section transversale en canal, respective,:
la sellette (12) étant portée au-dessus d'une plaque de fixation (14);
lesdites pointres-support étant interposées entre lesdits organes latéraux et le fond de ladite plaque de fixation;
la plaque de fixation comportant des trous traversants (28), adaptés pour être pénétrés par des vis (30) destinées à fixer la plaque de fixation à un couple de barres parallèles (32), s'étendant longitudinalement, espacées transversalement, pouvant chacune coulisser dans le canal de l'une desdites poutres support;
chacune desdites poutres-support comportant une pluralité de trous (26), formant une rangée alignée parallèlement à l'organe latéral respectif, des moyens de fixation par vis (30, 34) mâles et femelles étant prévus, adaptés pour coopérer avec chacune desdites bares et desdits trous, dans la pointe support respective, de manière que les barres puissent être fixées aux poutres en une position ajustable,
caractérisé en ce que :
- le canal de chacune des poutres support définit avec une partie supérieure dudit organe latéral respectif un conduit, dans lequel la barre respective peut coulisser, de manière que chaque poutre support soit interposée entre la plaque et la barre respective;
- lesdits trous ménagés dans les poutres supports sont des trous traversants;
- lesdits moyens de fixation par vis femelles sont constitués par des douilles de serrage taraudées, fixées aux barres;
- lesdits moyens de fixation par vis mâles sont constitués par lesdites vis de fixation de la plaque de fixation, s'étendant à travers lesdits trous ménagés dans la plaque, à travers les trous ménagés dans les poutres support et s'engageant, par leur filetage, avec lesdites douilles de serrage taraudées.

2. Un support selon la revendication 1, caractérisé en ce que chaque barre (22) comporte des trous (38) dans lesquels les douilles de serrage (34) sont soudées.

3. Un support selon la revendication 2, caractérisé en ce que les distances entre les parties supérieures des organes latéraux (L) et les part tes (20b) leur faisant face des poutres support (20) correspondent sensiblement aux longueurs des douilles de serrage taraudées (34).

4. Un dispositif selon l'une quelconque des revendications précédentes, caractérisé en ce que les poutres support (20) sont fixées aux organes latéraux (L) du châssis (T) par des boulons (22).
